# EUROPEAN PATENT APPLICATION

(11) **EP 2 599 696 A1**
(43) Date of publication of application: **05.06.2013**
(21) Application number: 12192431.0
(22) Date of filing: 13.11.2012
(51) Int. Cl.: B62J 6/00, B62J 6/04

(54) **Straddle type vehicle**

(30) Priority: 30.11.2011 JP 2011262824
(71) Applicant: Yamaha Hatsudoki Kabushiki Kaisha, Iwata-shi, Shizuoka 438-8501 (JP)
(72) Inventor: Konno, Toshihiko, Shizuoka, Shizuoka 438-8501 (JP)
(74) Representative: Stöckeler, Ferdinand

(57) **Abstract**

A straddle type vehicle comprising a taillight (7) which is attached to a rear portion of a vehicle body cover (571, 572), a pair of directional indicator lights (8) which are attached to the rear portion of the vehicle body cover (571, 572) and outward of the taillight (7) in a vehicle width direction wherein the taillight (7) has a rear end face (71) facing rearward of the vehicle body, at least a portion of each of the directional indicator lights (8) is located lower than a lower edge (71a) of the rear end face (71) as viewed from outside in thevehicle width direction and the rear end face (71) slopes rearward as it goes from the lower edge (71a) to an upper edge (71b) thereof.

## Description

### BACKGROUND

### TECHNICAL FIELD

The present invention relates to straddle type vehicles, and more particularly, to the arrangement of directional indicator lights and a taillight at the rear of a vehicle body.

### DESCRIPTION OF THE BACKGROUND ART

Motorcycles, which are a type of straddle type vehicles, are known. A taillight and directional indicator lights are provided at the rear of a motorcycle. A taillight and directional indicator lights are arranged in various ways on different motorcycles. A motorcycle is disclosed having a pair of opposite directional indicator lights, each provided on a side of the vehicle body, with a taillight between them (see JP 3878652 B).

In the motorcycle of JP 3878652 B, the directional indicator lights are located at the same height as the upper portion of the taillight. Each directional indicator light is located forward of the taillight.

### SUMMARY

The inventors recognized that, in the motorcycle of JP 3878652 B, it is difficult to look at the directional indicator lights and the taillight at the same time from behind. To someone seeing the rear side of the motorcycle from the rear right, the left directional indicator light is hidden behind the taillight and is difficult to see. To someone seeing the rear side of the motorcycle from the rear left, the right directional indicator light is hidden behind the taillight and is difficult to see.

An object of the present invention is to provide a motorcycle where the two directional indicator lights can be seen at the same time from diagonally behind.

### SUMMARY

A straddle type vehicle according to the present invention includes: a vehicle body frame; a vehicle body cover; a taillight; and directional indicator lights. The vehicle body frame extends in a front-to-rear direction above a rear wheel. The vehicle body cover covers the vehicle body frame. The taillight is attached to a rear portion of the vehicle body cover. A pair of directional indicator lights are attached to the rear portion of the vehicle body cover and outward of the taillight in a vehicle width direction. The taillight has a rear end face facing rearward of the vehicle body. At least a portion of each of the directional indicator lights is located lower than a lower edge of the rear end face as viewed from outside in a vehicle width direction. The rear end face slopes rearward as it goes from the lower edge to an upper edge thereof.

In the straddle type vehicle of the present invention, the rear end face of the taillight slopes rearward as it goes from its lower edge to its upper edge. In the straddle type vehicle of the present invention, at least a portion of each directional indicator light is located lower than the lower edge of the rear end face. This makes it easier to see the directional indicator lights from behind than would be the case if each of the entire directional indicator lights were located higher than the lower edge of the rear end face of the taillight, for example.

When one sees the rear side of a motorcycle from the rear right if each of the entire directional indicator lights is located higher than the lower edge of the rear end face of the taillight, the left directional indicator light is not easy to see because the left directional indicator light is hidden behind the taillight to someone seeing the rear side of the motorcycle from the rear right. Thus, it is difficult to see both directional indicator lights from the rear right at the same time. On the contrary, in the motorcycle of the present invention, the left directional indicator light is easy to see from the rear right because the left directional indicator light is not hidden behind the taillight to someone seeing the rear side of the above motorcycle from the rear right. Thus, in the motorcycle of the present invention, both left and right directional indicator lights can be easily seen from the rear right.

### BRIEF DESCRIPTION OF THE DRAWINGS

FIG. 1 is a left side view of an entire motorcycle according to an embodiment of the present invention.
FIG. 2 is a partial enlarged view of a rear portion of the motorcycle.
FIG. 3 is a rear view of the motorcycle as viewed from behind.
FIG. 4 is a plan view of the rear portion of the motorcycle as viewed from above.
FIG. 5 is a cross-sectional view of portions of the first and second rear covers where they are connected with each other.
FIG. 6 is an external view of the motorcycle as viewed from the rear left.

### DESCRIPTION OF THE EMBODIMENTS

A motorcycle 1 according to an embodiment of the present invention will now be described with reference to the drawings. The same or corresponding elements in different drawings are labeled with the same numerals, and their description will not be repeated.

### <Overall Configuration>

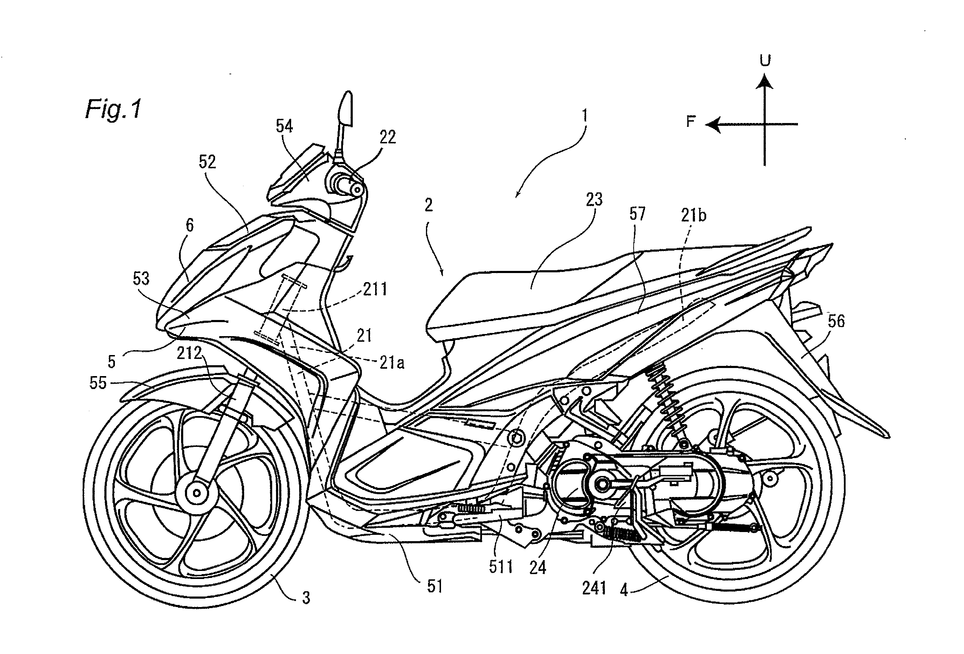

FIG. 1 shows a left side view of an entire motorcycle 1 according to the present invention. In the following description, "front/forward", "behind/rear(ward)", "left" and "right" each denote a direction as perceived by a rider sitting on the seat 23 of the motorcycle 1. In FIG. 1, the arrow F indicates the forward direction with respect to the motorcycle 1, while the arrow U indicates the upward direction with respect to the motorcycle 1.

The motorcycle 1 includes a vehicle body 2, a front wheel 3 provided at the front of the motorcycle 1, and a rear wheel 4 provided at the rear of the motorcycle 1.

The vehicle body 2 generally includes a vehicle body frame 21, a vehicle body cover 5, a headlight 6, handlebars 22, a seat 23 and a power unit 24.

The body frame 21 includes a front frame 21a and a rear frame 21b. The front frame 21a is located at the front of the motorcycle 1. The rear frame 21b is located behind the front frame 21a. The rear frame 21b is located above the rear wheel 4. The rear frame 21b extends in a front-to-rear direction. The body frame 21 supports the power unit 24, the seat 23 and other components. The power unit 24 includes an engine, a transmission and other components. In FIG. 1, the body frame 21 is suggested by broken lines.

The body frame 21 has a head pipe 211. The front frame 21a is attached to the head pipe 211. The front frame 21a extends rearward and obliquely downward from the head pipe 211. A steering shaft is rotatably inserted into the head pipe 211. The handlebars 22 are attached to the upper end of the steering shaft. A bracket is attached to the lower end of the steering shaft. A front fork 212 is attached to the left and right ends of the bracket. The front wheel 3 is rotatably attached to the lower end of the front fork 212. The body frame 21 is formed of a highly rigid metal, such as steel.

The entire body frame 21 is covered with the body cover 5. The body cover 5 is made of a resin. A footboard 51 is located below the body cover 5. The body cover 5 includes a front cover 52, a pair of side covers 53, a pair of rear covers 57, a handle cover 54, a front fender 55 and a rear fender 56.

The footboard 51 is provided below the seat 23. The footboard 51 extends in a front-to-rear direction. A center stand 511 is attached to the footboard 51.

The front cover 52 is located forward of the seat 23. The front cover 52 covers a front portion of the head pipe 211. The headlight 6 is located on the front cover 52.

The headlight 6 illuminates an area in front of the motorcycle 1. The headlight 6 is located above the front wheel 3.

Each side cover 53 covers a side of the front frame 21a. The side covers 53 are located at the front of the motorcycle 1. A portion of each side cover 53 is located lower than the front cover 52.

The rear covers 57 are located at the rear of the motorcycle 1. Each rear cover 57 is located outward of the rear frame 21b in a vehicle width direction. Each rear cover 57 slopes upward as it goes from the front to the rear thereof.

The handle cover 54 covers portions of the handlebars 22. The handle cover 54 is provided above the front cover 52.

The front fender 55 is located above the front wheel 3. The front fender 55 is located below the front cover 52. The front fender 55 extends to a location forward of the front cover 52. The rear fender 56 is located above the rear wheel 4.

The handlebars 22 are located above the front cover 52. The handlebars 22 extend in the left and right directions. A grip that can be grasped by a rider is located on each end of the handlebars 22.

The seat 23 is located above the power unit 24. A storage space in which a helmet or the like can be stored is provided below the seat 23.

The power unit 24 is located in the vicinity of the rear wheel 4. A CVT case 241, included in the power unit 24, is not covered with the body cover 5.

### <Configuration of Rear Portion of Motorcycle>

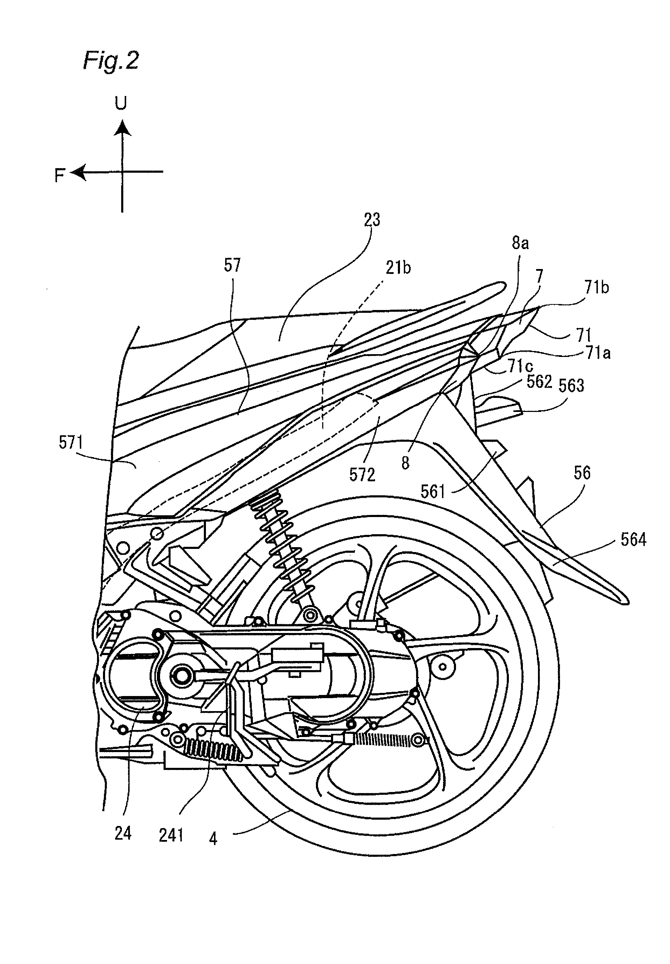

FIG. 2 is a partial enlarged view of a rear portion of the motorcycle 1. In FIG. 2, the arrow U indicates the upward direction with respect to the motorcycle 1. In FIG. 2, the arrow F indicates the forward direction with respect to the motorcycle 1.

A taillight 7 is located on the rear ends of the rear covers 57. Each rear cover 57 includes a first rear cover 571 and a second rear cover 572. The first rear cover 571 is located below the seat 23. The second rear cover 572 is a separate part from the first rear cover 571. The second rear cover 572 is attached to the first rear cover 571. A directional indicator light 8 is attached to the rear end of the second rear cover 572. The second rear cover 572 is located below the first rear cover 571. The second rear cover 572 extends in a front-to-rear direction.

The taillight 7 has a rear end face 71. The rear end face 71 faces rearward. The rear end face 71 slopes upward as it goes from the front to the rear thereof. The taillight 7 further has a bottom face 71c that extends forward and downward from the lower edge of the rear end face 71.

Each directional indicator light 8 is located forward of the lower edge 71a of the rear end face 71. The rear end 8a of the directional indicator light 8 is located forward of the lower edge 71a of the rear end face 71. In terms of height, the top portion of the directional indicator light 8 is located between the lower edge 71a and upper edge 71b of the rear end face 71. The bottom portion of the directional indicator light 8 is located lower than the lower edge 71a of the rear end face 71.

A rear fender 56 is attached to the rear covers 57. The directional indicator lights 8 are located above the rear fender 56. The rear fender 56 extends rearward and downward from the rear covers 57.

The rear fender 56 includes a bracket 561, a rear face 562 and an end cover 564. The bracket 561 is a component to which a license plate can be attached. The bracket 561 is located below the taillight 7. The bracket 561 is located lower than the rear face 562. The rear face 562 faces rearward. The rear face 562 is located forward of the lower edge 71a of the rear end face 71. The rear face 562 is located forward of the rear ends 8a of the directional indicator lights 8. An illuminating device 563 for illuminating the license plate is positioned on the rear face 562. FIG. 2 shows the rear portion of the motorcycle 1 where no license plate is mounted. The illuminating device 563 projects rearward from the rear face 562. The illuminating device 563 is located below the taillight 7. The illuminating device 563 is located below the directional indicator lights 8. The illuminating device 563 is located above the bracket 561. The illuminating device 563 emits light downward. The end cover 564 is provided on the rear end of the rear fender 56.

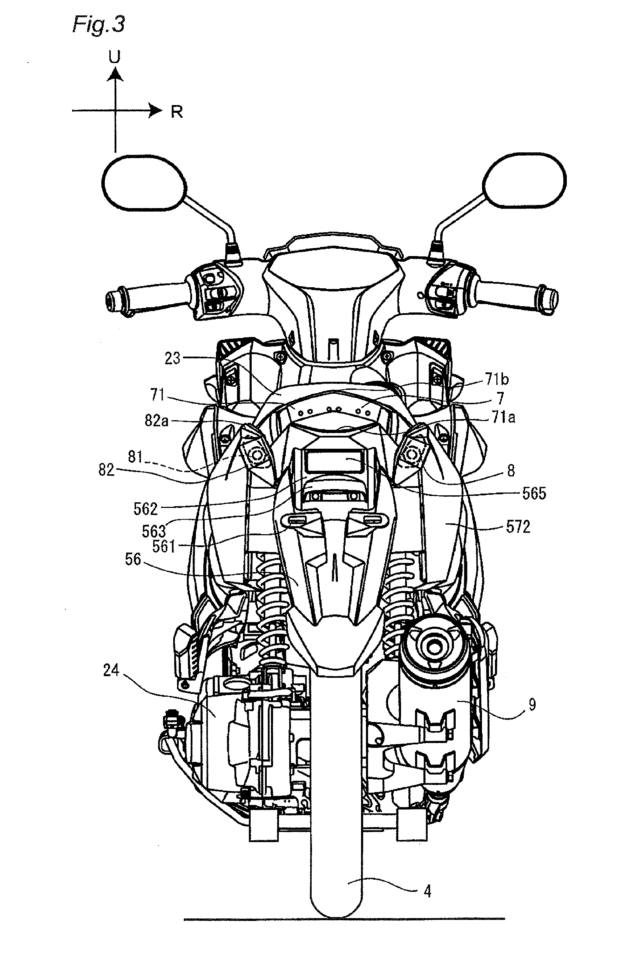

FIG. 3 shows an entire rear side of the motorcycle 1. The arrow U in FIG. 3 indicates the upward direction. The arrow R in FIG. 3 indicates the right direction as perceived by a rider sitting on the seat 23.

The rear fender 56 is located above the rear wheel 4. A muffler 9 is located to the right of the rear wheel 4. The power unit 24 is located to the left of the rear wheel 4.

A reflective plate 565 is attached to the rear face 562 of the rear fender 56. The reflective plate 565 is provided above the illuminating device 563. The rear end face 71 of the taillight 7 is located above the reflective plate 565. The directional indicator lights 8 are located to the left and right of the taillight 7. The seat 23 is located higher than the taillight 7.

Each directional indicator light 8 includes a bulb 81 and a lens 82. Each bulb 81 is located lower than the lower edge 71a of the rear end face 71. Each bulb 81 is located higher than the illuminating device 563. The bulb 81 of the right directional indicator light 8 is located to the right of the rightmost point of the taillight 7. The bulb 81 of the left directional indicator light 8 is located to the left of the leftmost point of the taillight 7. A lens 82 covers a rear portion of each bulb 81. Each lens 82 passes light emitted by its respective bulb 81. Each lens 82 has a plurality of steps 82a on its top.

The right directional indicator light 8 extends to the right as it goes from its bottom to its top in a rear view (as viewed from the rear of the vehicle). The left directional indicator light 8 extends to the left as it goes from its bottom to its top.

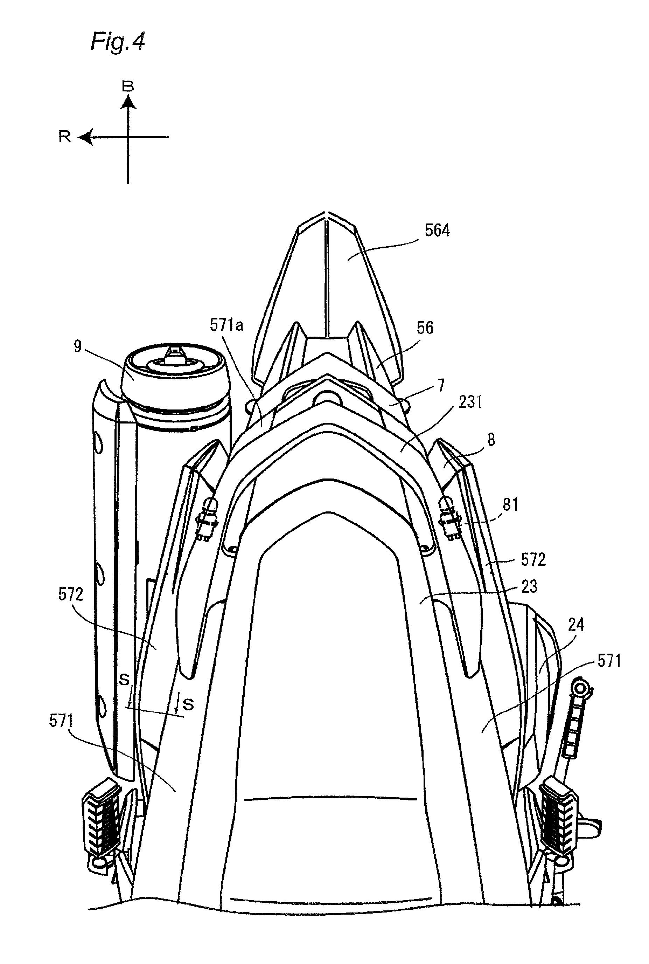

FIG. 4 is a plan view of the rear portion of the motorcycle 1. The arrow B in FIG. 4 indicates the rearward direction with respect to the motorcycle 1. The arrow R in FIG. 4 indicates the right direction as perceived by a rider sitting on the seat 23.

A tandem grip 231 is provided around a rear portion of the seat 23. The tandem grip 231 is attached to the first rear covers 571. At the rear portions 571b of the first rear covers 571, the vehicle has smaller widths as it goes from the front to the rear thereof. The second rear covers 572 are located outward of the first rear covers 571 in a vehicle width direction. Each second rear cover 572 slopes toward the center in a vehicle width direction as it goes to the rear thereof. The right second rear cover 572 slopes to the left as it goes from the front to the rear thereof. The left second rear cover 572 slopes to the right as it goes from the front to the rear thereof.

Each directional indicator light 8 is located forward of the rear end of the respective one of the first rear covers 571. Each directional indicator light 8 is located rearward of the seat 23. The taillight 7 is located rearward of the directional indicator lights 8.

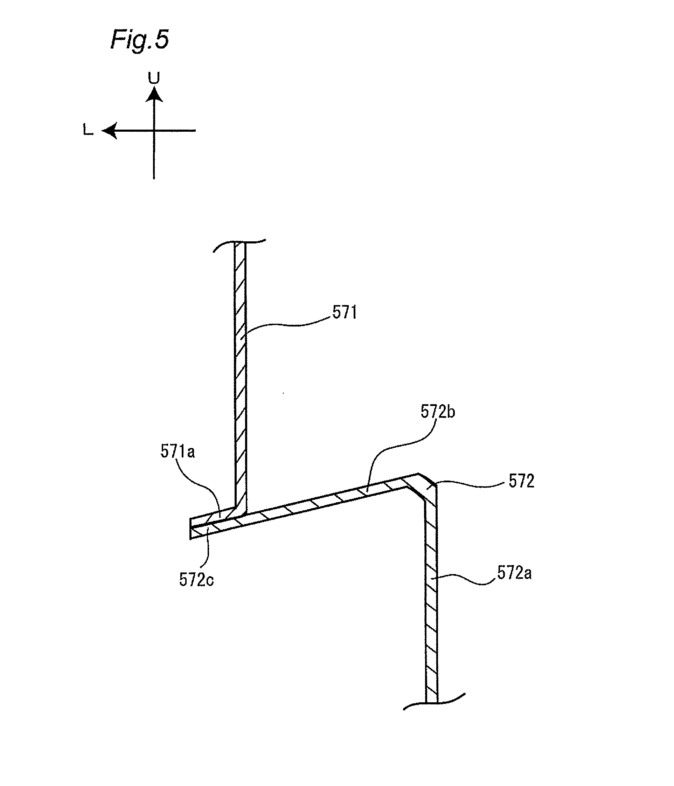

FIG. 5 is a cross-sectional view of the portions of the right first rear cover 571 and right second rear cover 572 where they are connected with each other, viewed from behind. FIG. 5 shows a cross section taken on line S-S of FIG. 4. In FIG. 5, the arrow U indicates the upward direction with respect to the motorcycle 1, while the arrow L indicates the left direction.

The first rear cover 571 has a first connection face 571a. The first connection face 571a is connected with the lower edge of the side plate of the first rear cover 571.

The second rear cover 572 includes a side plate 572a and a top plate 572b. The side plate 572a faces outward in a vehicle width direction. The top plate 572b is connected with the upper edge of the side plate 572a. The top plate 572b has a second connection face 572c located inward in a vehicle width direction. The second connection face 572c is a portion of the second rear cover where it is in contact with the first connection face 571a. The top plate 572b slopes downward as it goes from the outside to the inside thereof in a vehicle width direction.

In the motorcycle 1 of the above embodiment, the rear end face 71 of the taillight 7 slopes rearward as it goes from the lower edge 71a to the upper edge 71b, and at least a portion of each of the directional indicator lights 8 is located lower than the lower edge 71a of the rear end face 71. Thus, the directional indicator lights 8 can be seen from behind more easily than would be the case if each of the entire directional indicator lights 8 were located higher than the lower edge 71a of the rear end face 71 of the taillight 7, or if the rear end face 71 were vertically positioned.

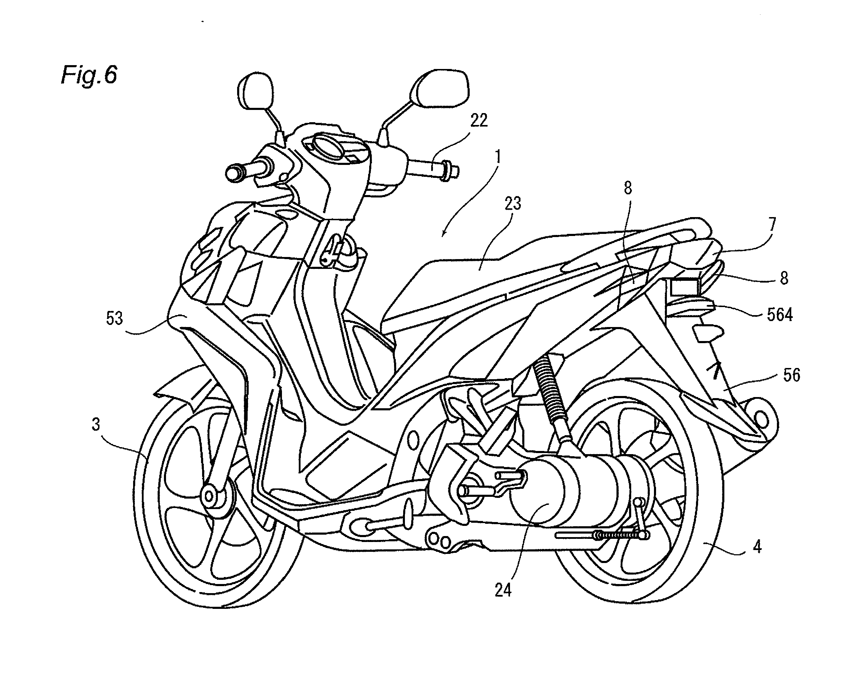

FIG. 6 is a perspective view of the motorcycle 1 according to the above embodiment, as viewed from the rear left.

As shown in FIG. 6, to someone seeing the motorcycle 1 from the rear left, the right directional indicator light 8 is visible between the taillight 7 and illuminating device 563. Thus, when one sees the motorcycle 1 from the rear left, one can see the left and right directional indicator lights 8 and taillight at the same time.

Further, in the motorcycle 1, a portion of each of the directional indicator lights 8 is located higher than the lower edge 71a of the rear end face as viewed from outside in a vehicle width direction, and the rear end of each directional indicator light 8 is located forward of the upper edge 71b of the taillight 7. Thus, the taillight 7 is not hidden behind either one of the directional indicator lights 8 to someone seeing the vehicle from outside in a vehicle width direction. Thus, the taillight 7 is more visible than would be the case if the uppermost point of each of the directional indicator lights 8 were located rearward of the upper edge 71b of the taillight 7.

In the motorcycle 1 according to the above embodiment, the directional indicator lights 8 are located, in a top-to-bottom direction, between the illuminating device 563 and taillight 7. Thus, none of the directional indicator lights 8 is likely to be hidden behind the illuminating device 563 or taillight 7 to someone trying to see the directional indicator lights 8 from behind, thereby making the directional indicator lights 8 more visible.

### [Other Embodiments]

While the above embodiment has illustrated a two-wheeled motorcycle 1, the present invention is not limited thereto and may be used in a three- or four-wheeled straddle type vehicle.

Further, while the above embodiment has illustrated a scooter-type motorcycle 1, the present invention is not limited thereto and may be used in other types of motorcycles.

While in the above embodiment, the top portion of each directional indicator light 8 is located higher than the lower edge 71a of the taillight 7, the present invention is not limited to such a configuration, and each of the entire directional indicator lights may be located lower than the taillight. Generally, the higher the taillight is located, the more visible it is to the rider of a motorcycle behind the vehicle.

While the above embodiment has illustrated a rear cover divided into a first rear cover and a second rear cover, the present invention is not limited to such a configuration, and the rear cover may be one single part.

### EXPLANATION OF REFERENCE NUMERALS

- 1: motorcycle (straddle type vehicle)
- 4: rear wheel
- 5: vehicle body cover
- 21: vehicle body frame
- 7: taillight
- 8: directional indicator lights
- 56: rear fender
- 71: rear end face
- 71a: lower edge
- 71b: upper edge
- 561: bracket
- 562: rear face (attachment face)
- 563: illuminating device
- 571: first rear cover (first cover)
- 572: second rear cover (second cover)

## Claims

1. A straddle type vehicle comprising:
a vehicle body frame (21) extending in a front-to-rear direction above a rear wheel (4);
a vehicle body cover (5) covering the vehicle body frame (21);
a taillight (7) attached to a rear portion of the vehicle body cover (5); and
a pair of directional indicator lights (8) attached to the rear portion of the vehicle body cover (5) and outward of the taillight (7) in a vehicle width direction,
wherein the taillight (7) has a rear end face(71) facing rearward of the vehicle body,
at least a portion of each of the directional indicator lights (8) is located lower than a lower edge (71a) of the rear end face (71) in a side view of the vehicle, and
the rear end face (71) slopes rearward in the direction from the lower edge (71a) to an upper edge (71b) thereof.

2. The straddle type vehicle according to claim 1, wherein:
at least a portion of each of the directional indicator lights (8) is provided higher than the lower edge (71a) of the rear end face (71) in a vehicle side view, and
a rear end of each of the directional indicator lights (8) is located forward of a rearmost point of the taillight (7).

3. The straddle type vehicle according to claim 1 or 2, further comprising:
a rear fender (56) provided on the rear portion of the vehicle body cover (5) and extending downward and rearward from the vehicle body cover (5),
wherein the rear fender (56) is located, in a vehicle width direction, between the directional indicator lights (8), and has an attachment face (562) facing rearward,
a bracket (561) to which a license plate can be attached is provided below the attachment face (562) of the rear fender (56),
the attachment face (562) is provided forward of the lower edge of the rear end face (71), and
a portion of each of the directional indicator lights (8) is located rearward of the attachment face (562).

4. The straddle type vehicle according to claim 3, wherein:
an illuminating lamp (563) is provided on the attachment face (562) above the bracket (561) for illuminating an area below,
the illuminating lamp (563) projects rearward from the attachment face (562), and
at least a portion of each of the directional indicator lights (8) is located, in a top-to-bottom direction, between the taillight (7) and the illuminating lamp (563) as viewed from outside in a vehicle width direction.

5. The straddle type vehicle according to claim 3 or 4, wherein:
each of the directional indicator lights (8) is located higher than the rear fender (56).

6. The straddle type vehicle according to any one of claims 1 to 5, wherein:
the vehicle body cover (5) includes a first cover (571) supporting the taillight (7) and a second cover (572) supporting the directional indicator lights (8), and
the second cover (572) projects outward from the first cover (571) in a vehicle width direction.

7. The straddle type vehicle according to claim 6, wherein:
as viewed from a rear of the vehicle body, an upper face of the second cover (572) extends downward from an outermost point thereof in a vehicle width direction toward a portion thereof where it is connected with the first cover (571).

8. The straddle type vehicle according to claim 7, wherein:
the first cover (571) and the second cover (572) are separate parts.

9. The straddle type vehicle according to any one of claims 6 to 8, wherein:
each of the directional indicator lights (8) slopes inward in a vehicle width direction in a direction from a front toward a rear thereof.

10. The straddle type vehicle according to any one of claims 1 to 9, wherein:
a rearmost portion of each of the directional indicator lights (8) is located forward of the upper edge of the rear end face (71).

11. The straddle type vehicle according to any one of claims 1 to 10, wherein:
each of the directional indicator lights (8) extends outward in a vehicle width direction in a direction from a lowermost point to an uppermost point thereof in a rear view of the vehicle.
